(19) Europäisches Patentamt
European Patent Office
Office européen des brevets

(11) EP 4 297 129 A1

(12) EUROPEAN PATENT APPLICATION
published in accordance with Art. 153(4) EPC

(43) Date of publication:
**27.12.2023 Bulletin 2023/52**

(21) Application number: **21926937.0**

(22) Date of filing: **29.12.2021**

(51) International Patent Classification (IPC):
***H01M 4/62*** *(2006.01)* ***H01M 4/131*** *(2010.01)*
***H01M 10/0567*** *(2010.01)* ***H01M 10/052*** *(2010.01)*
***H01M 4/02*** *(2006.01)*

(52) Cooperative Patent Classification (CPC):
**H01M 4/02; H01M 4/131; H01M 4/62;**
**H01M 10/052; H01M 10/0525; H01M 10/0567;**
**H01M 10/4235;** Y02E 60/10

(86) International application number:
**PCT/KR2021/020173**

(87) International publication number:
**WO 2022/177139 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.02.2021 KR 20210022035**

(71) Applicant: **Samsung SDI Co., Ltd.**
**Yongin-si, Gyeonggi-do 17084 (KR)**

(72) Inventors:
- **KIM, Da Hyun**
**Yongin-si, Gyeonggi-do 17084 (KR)**
- **KIM, Min Seo**
**Yongin-si, Gyeonggi-do 17084 (KR)**
- **KIM, Sang Hyung**
**Yongin-si, Gyeonggi-do 17084 (KR)**
- **KIM, Sang Hoon**
**Yongin-si, Gyeonggi-do 17084 (KR)**
- **PARK, Hye Jin**
**Yongin-si, Gyeonggi-do 17084 (KR)**
- **WOO, Myung Heui**
**Yongin-si, Gyeonggi-do 17084 (KR)**
- **RYU, Bo Kyung**
**Yongin-si, Gyeonggi-do 17084 (KR)**
- **LEE, Tae Jin**
**Yongin-si, Gyeonggi-do 17084 (KR)**

(74) Representative: **Gulde & Partner**
**Patent- und Rechtsanwaltskanzlei mbB**
**Wallstraße 58/59**
**10179 Berlin (DE)**

# (54) CATHODE FOR LITHIUM SECONDARY BATTERY AND LITHIUM SECONDARY BATTERY COMPRISING SAME

(57) Provided are a cathode for a lithium secondary battery and a lithium secondary battery including the same. The cathode for a lithium secondary battery may improve low-temperature lifespan characteristics of a lithium secondary battery, by including: a positive active material; and an additive including a compound represented by Formula 1 below:

Formula 1

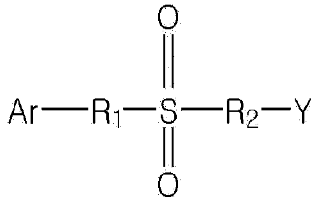

,

wherein in Formula 1, Ar, $R_1$, $R_2$, and Y are as defined in the detailed description.

EP 4 297 129 A1

FIG. 1

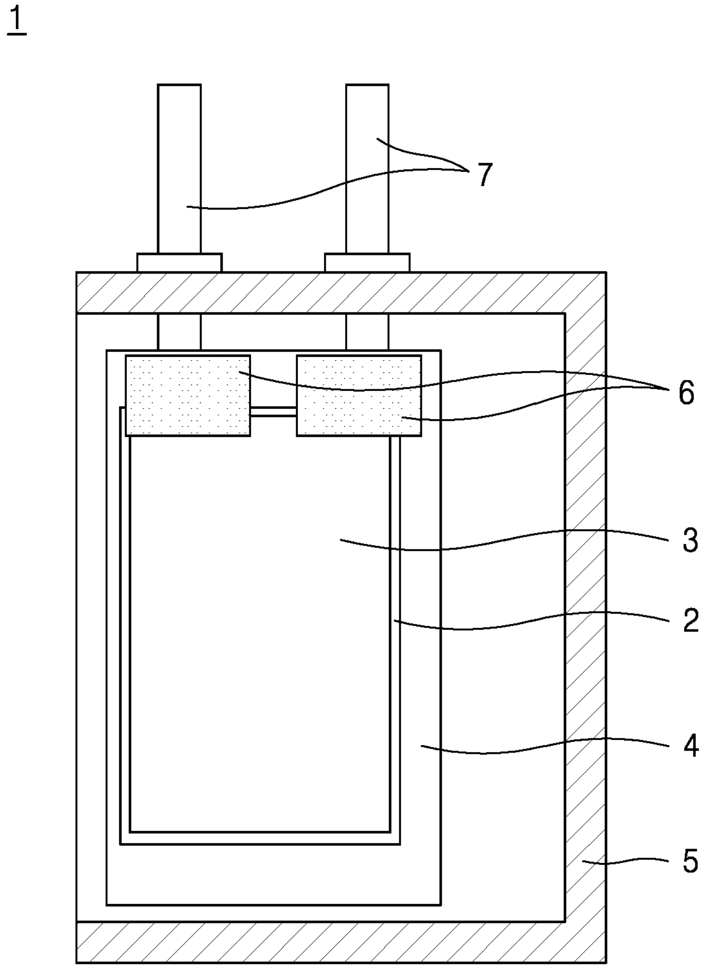

## Description

### TECHNICAL FIELD

The present disclosure relates to a cathode for a lithium secondary battery and a lithium secondary battery including the same.

### BACKGROUND ART

Lithium secondary batteries are used as power supplies for portable electronic devices such as video cameras, mobile phones, and laptop computers. Rechargeable lithium secondary batteries have a high energy density per unit weight and may be charged at a high speed as compared to existing lead storage batteries, nickel-cadmium batteries, nickel-hydride batteries, and nickel-zinc batteries.

In general, a lithium secondary battery is prepared by using, as a positive active material and a negative active material, materials in which reversible intercalation and deintercalation of lithium ions are possible, and filling an electrolyte between the cathodecathode and the anode.

A lithium-transition metal oxide is used as the positive active material of a lithium secondary battery, various types of carbon-based materials are used as the negative active material, and a lithium salt dissolved in a non-aqueous organic solvent is used as the electrolyte.

In particular, since characteristics of a lithium secondary battery are exhibited by complex reactions of a cathode and an electrolyte, an anode and an electrolyte, etc., using an appropriate electrolyte is one of the important variables for improving performance of a lithium secondary battery.

Since a lithium secondary battery operates at a high driving voltage, an aqueous electrolyte having high reactivity with lithium cannot be used. An organic electrolyte is generally used as an electrolyte for a lithium secondary battery. An organic electrolyte is prepared by dissolving a lithium salt in an organic solvent. A preferable organic solvent is stable at a high voltage, has high ionic conductivity and high permittivity, and has low viscosity.

However, when an organic electrolyte containing a lithium salt is used as an electrolyte for a lithium secondary battery, lifespan characteristics of the lithium secondary battery may be deteriorated due to side reactions between the anode/cathode and the electrolyte.

Accordingly, there is a need for a lithium secondary battery capable of exhibiting improved lifespan characteristics even when operating at a high voltage.

### DESCRIPTION OF EMBODIMENTS

### TECHNICAL PROBLEM

An aspect is to provide a cathode material for a lithium secondary battery capable of improving battery performance, particularly low-temperature lifespan characteristics.

Another aspect is to provide a cathode for a lithium secondary battery including the cathode material.

Still another aspect is to provide a lithium secondary battery including the cathode material.

### SOLUTION TO PROBLEM

According to an aspect, provided is a cathode material for a lithium battery including:

a positive active material; and
an additive including a compound represented by Formula 1 below:

Formula 1

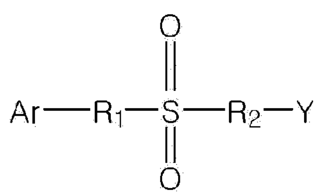

,

wherein in Formula 1,

Ar is a substituted or unsubstituted $C_6$-$C_{60}$ aryl group, a substituted or unsubstituted $C_6$-$C_{60}$ aryloxy group, a substituted or unsubstituted $C_2$-$C_{60}$ heteroaryl group, a substituted or unsubstituted monovalent non-aromatic condensed polycyclic group, or a substituted or unsubstituted monovalent non-aromatic condensed heteropolycyclic group;

$R_1$ and $R_2$ are each independently a single bond or an unsubstituted $C_1$-$C_{30}$ alkylene group, and

Y is an isocyanate group (-NCO), an isothiocyanate group (-NCS), a cyanate group (-OCN), a thiocyanate group (-SCN), a cyano group (-CN), or an isocyano group (-NC).

According to another aspect, provided is a cathode for a lithium secondary battery including the cathode material.

According to still another aspect, provided is a lithium secondary battery including:

a cathode including a cathode material according to any one of claims 1 to 8;
an anode including a negative active material; and
an electrolyte arranged between the cathode and the anode.

ADVANTAGEOUS EFFECTS OF DISCLOSURE

By using a cathode material for a lithium secondary battery according to an embodiment, low-temperature lifespan characteristics of a lithium secondary battery may be further improved. In addition, it is possible to provide a lithium secondary battery with improved battery performance by forming a uniform film on a cathode during formation to protect the cathode and suppress battery side reactions.

BRIEF DESCRIPTION OF DRAWINGS

FIG. 1 shows a schematic diagram of a lithium secondary battery according to an embodiment.

FIG. 2 shows results of measuring an open circuit voltage (OCV) of lithium secondary batteries of Examples 1 to 4 and Comparative Example 1, according to storage time at 60 °C.

FIG. 3 shows results of measuring alternating current internal resistance (AC-IR) of lithium secondary batteries of Examples 1 to 4 and Comparative Example 1, according to storage time at 60 °C.

FIG. 4 shows results of measuring low-temperature lifespan characteristics of lithium secondary batteries of Examples 1 to 4 and Comparative Example 1.

FIG. 5 shows results of measuring low-temperature lifespan characteristics of a lithium secondary battery, in which a compound represented by Formula 2-1 is added to an electrolytic solution, as a reference example.

MODE OF DISCLOSURE

Hereinafter, a cathode material for a lithium secondary battery according to example embodiments and a lithium secondary battery including the same will be described in more detail.

A cathode material for a lithium secondary battery according to an embodiment includes:

a positive active material; and
an additive including a compound represented by Formula 1 below:

Formula 1

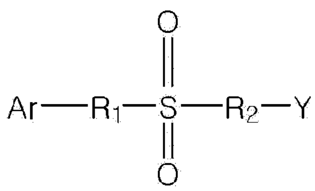

,

wherein in Formula 1,

Ar is a substituted or unsubstituted $C_6$-$C_{60}$ aryl group, a substituted or unsubstituted $C_6$-$C_{60}$ aryloxy group, a substituted or unsubstituted $C_2$-$C_{60}$ heteroaryl group, a substituted or unsubstituted monovalent non-aromatic condensed polycyclic group, or a substituted or unsubstituted monovalent non-aromatic condensed heteropolycyclic group;

$R_1$ and $R_2$ are each independently a single bond or an unsubstituted $C_1$-$C_{30}$ alkylene group, and

Y is an isocyanate group (-NCO), an isothiocyanate group (-NCS), a cyanate group (-OCN), a thiocyanate group (-SCN), a cyano group (-CN), or an isocyano group (-NC).

When an organic electrolyte containing a lithium salt is used as an electrolyte for a lithium secondary battery, lifespan characteristics of the lithium secondary battery may deteriorate due to side reactions between the anode/cathode and the electrolyte. Attempts have been made in the art to improve lifespan characteristics of lithium secondary batteries by reducing internal resistance of a battery by adding additives to the electrolyte. In contrast, a cathode material for a lithium secondary battery according to an embodiment includes an additive including the compound represented by Formula 1 in the cathode instead of the electrolyte, thereby providing a lithium secondary battery with improved battery performance.

The compound represented by Formula 1 forms a film on a surface of the positive active material through oxidative decomposition in the cathode, and thus, a rate of movement of lithium ions in the battery may be controlled, and thus, low-temperature lifespan characteristics of a high voltage battery may be further improved. In addition, when a cathode is prepared by using a cathode material including the compound represented by Formula 1, a more uniform film is formed on the cathode during formation to protect the cathode and reduce side reactions with an electrolytic solution, and thus, battery performance may be improved.

More specifically, the cathode material for a lithium secondary battery according to an embodiment includes the compound represented by Formula 1 as an additive to form a cathode electrolyte interphase (CEI) film and/or a protective layer having low impedance characteristics on the surface of the cathode, and thus, internal resistance of the battery may be reduced. The compound represented by Formula 1 strongly interacts with transition metal ions of the positive active material to completely cap and inactivate the reaction center on the surface of the cathode, thereby preventing dissolution of the transition metal and oxidation of the solvent. That is, a CEI film having low impedance characteristics is formed on the surface of the cathode. This CEI film prevents formation of by-products such as gas and HF by preventing oxidation of the electrolyte, and prevents destruction of the electrode structure, thereby improving cycle stability and rate performance of the battery. In addition, as the CEI film is formed, resistance at an interface between the electrolyte and the cathode is lowered to improve lithium ion conductivity, and thus, low-temperature discharge voltage is increased.

In addition, the cathode material for a lithium secondary battery has an excellent effect of suppressing resistance in a lithium secondary battery at a high temperature, and therefore, a lithium secondary battery with improved lifespan and high-temperature stability may be provided.

According to an example, $R_1$ directly bonded to a sulfonyl group in Formula 1 may be an isocyanate group (-N=C=O), an isothiocyanate group (-N=C=S), a cyanate group (-O-C=N), a thiocyanate group (-S-C=N), a cyano group (-C=N), or an isocyano group (-N =C-), and such $R_1$ may be one of electron withdrawing groups with a high dipole moment. These functional groups strongly bond to transition metals, transition metal oxides, carbon materials, etc. exposed on the surface of the positive active material, and in particular at a high temperature of 45 °C or higher, the functional groups are more strongly bonded to the surface of the electrode active material, forming a protective layer in a form of a complex. Therefore, during an initial charging of a lithium battery, the compound into which the electron withdrawing group is introduced forms a more robust and dense inactive film in a state of being adsorbed to the surface of the cathode, and thus, stability of the inactive film is maintained continuously even during repeated charging and discharging, and battery performance may be maintained.

According to an example, Ar may be a substituted or unsubstituted $C_6$-$C_{30}$ aryl group, specifically, a substituted or unsubstituted $C_6$-$C_{26}$ aryl groupa substituted or unsubstituted $C_6$-$C_{18}$ aryl group, a substituted or unsubstituted $C_6$-$C_{14}$ aryl group, more specifically, a substituted or unsubstituted $C_6$ aryl group in Formula 1. Similar to the electron withdrawing group, Ar may be easily decomposed under a lower initiation voltage by reducing reduction voltage of the compound itself, and thus, Ar exhibits high reactivity with the cathode, and may form a robust film on the surface of the cathode.

According to an embodiment, the compound represented by Formula 1 may be an isocyanate-based compound represented by Formula 1-1 below:

Formula 1-1

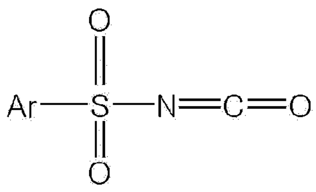

,

wherein in Formula 1-1, Ar is as defined in Formula 1 above.

According to an example, the compound represented by Formula 1 above may be a compound represented by Formula 2 below:

Formula 2

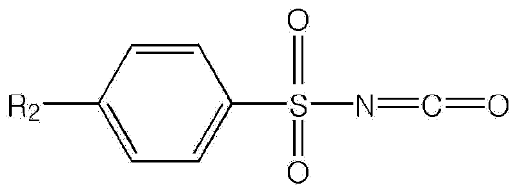

,

wherein in Formula 2,

$R_2$ is hydrogen, a fluoro group (-F), a chloro group (-Cl), a bromo group (-Br), an iodo group (-I), a hydroxyl group, a cyano group, a nitro group, an amino group, an amidino group, a hydrazine group, a hydrazone group, carboxylic acid or a salt thereof, sulfonic acid or a salt thereof, phosphoric acid or a salt thereof, a substituted or unsubstituted $C_1$-$C_{20}$ alkyl group, a substituted or unsubstituted $C_1$-$C_{20}$ alkoxy group, a substituted or unsubstituted $C_2$-$C_{20}$ alkenyl group, a substituted or unsubstituted $C_2$-$C_{20}$ alkynyl group, a substituted or unsubstituted $C_3$-$C_{20}$ cycloalkyl group, a substituted or unsubstituted $C_6$-$C_{20}$ aryl group, or a substituted or unsubstituted $C_2$-$C_{20}$ heteroaryl group.

According to an example, in Formula 2, R may be hydrogen, -F, -Cl, -Br, -I, or an unsubstituted $C_1$-$C_{10}$ alkyl group.

For example, the compound represented by Formula 1 may include at least one of the compounds represented by Formulas 2-1 to 2-3 below:

Formula 2-1

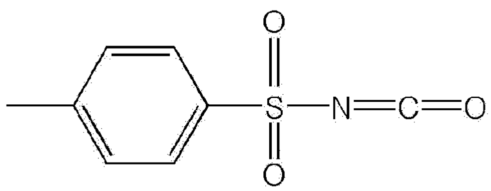

,

Formula 2-2

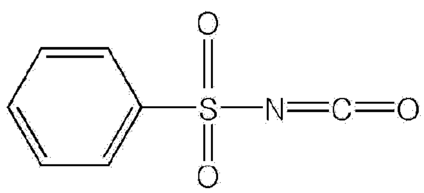

,

and

Formula 2-3

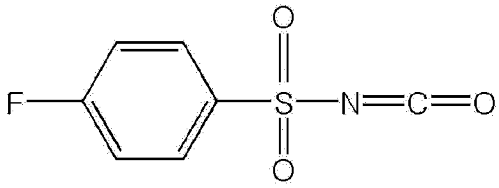

An amount of the compound represented by Formula 1 may be greater than 0 parts by weight and 10 parts by weight or less, with respect to 100 parts by weight of the positive active material. For example, the amount of the compound represented by Formula 1 may be about 0.001 parts by weight to about 5 parts by weight, about 0.001 parts by weight to about 3 parts by weight, or about 0.001 parts by weight to about 1 part by weight, with respect to 100 parts by weight of the positive active material. Within the range, it is possible to provide a lithium secondary battery with improved long-term resistance characteristics at high temperatures and improved low-temperature lifespan characteristics.

For the positive active material, any material commonly used in the art may be used. For example, a compound represented by any one of the following formulas may be used: $Li_aA_{1-b}B_bD_2$ (wherein $0.90 \leq a \leq 1$, and $0 \leq b \leq 0.5$); $Li_aE_{1-b}B_bO_{2-c}D_c$ (wherein $0.90 \leq a \leq 1$, $0 \leq b \leq 0.5$, and $0 \leq c \leq 0.05$); $LiE_{2-b}B_bO_{4-c}D_c$(wherein $0 \leq b \leq 0.5$, and $0 \leq c \leq 0.05$); $Li_aNi_{1-b-c}Co_bB_cD_\alpha$(wherein $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (wherein $0.90 \leq a \leq 1$, $0 \leq b \leq 0.5$, $0 \leq c \leq 0.05$, and $0 < \alpha < 2$); $Li_aNi_{1-b-c}Co_bB_cO_{2-\alpha}F_2$(wherein $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$(wherein $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$(wherein $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$(wherein $0.90 \leq a \leq 1$, $0 \leq b \leq 0.5$, $0 \leq c \leq 0.05$, and $0 < \alpha < 2$); $Li_aNi_bE_cG_dO_2$(wherein $0.90 \leq a \leq 1$, $0 \leq b \leq 0.9$, $0 \leq c \leq 0.5$, and $0.001 \leq d \leq 0.1$.); $Li_aNi_bCo_cMn_dGeO_2$(wherein $0.90 \leq a \leq 1$, $0 \leq b \leq 0.9$, $0 \leq c \leq 0.5$, $0 \leq d <0.5$, and $0.001 \leq e \leq 0.1$); $Li_aNiG_bO_2$ (wherein $0.90 \leq a \leq 1$, and $0.001 \leq b <0.1$); $Li_aCoG_bO_2$ (wherein $0.90 \leq a \leq 1$, and $0.001 \leq b <0.1$); $Li_aMnG_bO_2$ (wherein $0.90 \leq a \leq 1$, and $0.001 \leq b <0.1$); $Li_aMn_2G_bO_4$ (wherein $0.90 \leq a \leq 1$, and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$($0 \leq f \leq 2$); $Li_{(3-f)}Fe_2(PO_4)_3$ ($0 \leq f \leq 2$); and $LiFePO_4$.

In the formulas, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

For example, for the positive active material, at least one composite oxide of lithium with a metal selected from cobalt, manganese, nickel, and combinations thereof, may be used, as a lithium-containing metal oxide. For example, $LiCoO_2$, $LiMn_xO_{2x}$(x=1, 2), $LiNi_{1-x}Mn_xO_{2x}$ (0<x<1), $LiNi_{1-x-y}Co_xMn_yO_2$ ($0 \leq x \leq 0.5$, $0 \leq y \leq 0.5$), $LiNi_{1-x-y}Co_xAl_yO_2$ ($0 \leq x \leq 0.5$, $0 \leq y \leq 0.5$), $FePO_4$, etc. may be used.

A compound with a coating layer on a surface of the above-mentioned compound may be used, or a mixture of the above-mentioned compound and the compound with a coating layer may be used. The coating layer may include a compound of a coating element, such as an oxide of a coating element, a hydroxide of a coating element, an oxyhydroxide of a coating element, an oxycarbonate of a coating element, or a hydroxycarbonate of a coating element. Compounds constituting the coating layer may be amorphous or crystalline. As the coating element included in the coating layer, Mg, Al, Co, K, Na, Ca, Si, Ti, V, Sn, Ge, Ga, B, As, Zr, or mixtures thereof may be used. In a process of forming the coating layer, any coating method (for example, spray coating, an immersion method, etc.) may be used as long as the compound may be coated in a way that does not adversely affect physical properties of the positive active material by using these elements, and since this may be well understood by those skilled in the art, a detailed description thereof will be omitted.

According to an example, the positive active material includes a lithium transition metal oxide including nickel and other transition metals. In the lithium transition metal oxide including nickel and other transition metals, an amount of nickel may be 60 mol% or more, for example, 75 mol% or more, for example, 80 mol% or more, for example, 85 mol% or more, or for example, 90 mol% or more, with respect to the total number of moles of the transition metal.

For example, the lithium transition metal oxide may be a compound represented by Formula 3 below:

Formula 3 $Li_aNi_xCo_yM_zO_{2-b}A_b$,

wherein in Formula 3, $1.0 \leq a \leq 1.2$, $0 \leq b \leq 0.2$, $0.8 \leq x<1$, $0<y \leq 0.3$, $0<z \leq 0.3$, and x+y+z=1, M is at least one selected from manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), and boron (B), and A is F, S, Cl, Br, or a combination

thereof. For example, it may be $0.7 \leq x < 1$, $0 < y \leq 0.3$, and $0 < z \leq 0.3$; $0.8 \leq x < 1$, $0 < y \leq 0.3$, and $0 < z \leq 0.3$; $0.8 \leq x < 1$, $0 < y \leq 0.2$, and $0 < z \leq 0.2$; $0.83 \leq x < 0.97$, $0 < y \leq 0.15$, and $0 < z \leq 0.15$; or $0.85 \leq x < 0.95$, $0 < y \leq 0.1$, and $0 < z \leq 0.1$.

For example, the lithium transition metal oxide may be at least one compound represented by Formulas 4 and 5 below:

Formula 4 $LiNi_xCo_yMn_zO_2$,

wherein in Formula 4, $0.6 \leq x \leq 0.95$, $0 < y \leq 0.2$, and $0 < z \leq 0.1$, for example, $0.7 \leq x \leq 0.95$, $0 < y \leq 0.3$, and $0 < z \leq 0.3$,

Formula 5 $LiNi_xCo_yAl_zO_2$,

wherein in Formula 5, $0.6 \leq x \leq 0.95$, $0 < y \leq 0.2$, and $0 < z \leq 0.1$, for example, $0.7 \leq x \leq 0.95$, $0 < y \leq 0.3$, and $0 < z \leq 0.3$, for example, $0.8 \leq x \leq 0.95$, $0 < y \leq 0.3$, and $0 < z \leq 0.3$, for example, $0.82 \leq x \leq 0.95$, $0 < y \leq 0.15$, and $0 < z \leq 0.15$, for example, $0.85 \leq x \leq 0.95$, $0 < y \leq 0.1$, and $0 < z \leq 0.1$.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, $LiNi_{0.8}Co_{0.1}Mn_{0.2}O_2$, or $LiNi_{0.88}Co_{0.1}Al_{0.02}O_2$.

According to an example, the positive active material includes at least one active material selected from the group consisting of Li-Ni-Co-Al (NCA), Li-Ni-Co-Mn (NCM), lithium cobalt oxide ($LiCoO_2$), lithium manganese oxide ($LiMnO_2$), lithium nickel oxide ($LiNiO_2$), and lithium iron phosphate ($LiFePO_4$).

According to an example, the cathode material may further include a conductive material and a binder.

The binder serves to attach positive active material particles to each other and also to attach the positive active material to the positive current collector, and specific examples include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like, but the binder is not limited thereto.

The conductive material is used to impart conductivity to the electrode, and any material that does not cause a chemical change in the configured battery, and is electronically conductive may be used, and for example, natural graphite, artificial graphite, carbon black, acetylene black, ketjen black, carbon fiber, metal powder, metal fiber, etc. of copper, nickel, aluminum, silver, etc. may be used, and in addition, one type or a mixture of at least one type of a conductive material such as a polyphenylene derivative may be used.

A cathode for a lithium secondary battery according to an embodiment includes the cathode material described above.

A lithium secondary battery according to an embodiment includes a cathode including the cathode material; an anode including a negative active material; and an electrolyte arranged between the cathode and the anode.

The lithium secondary battery may further improve low-temperature lifespan characteristics by including the above-described cathode material for a lithium secondary battery, and in addition, protect the cathode and suppress side reactions of the battery by forming a uniform film on the cathode, and thus, performance of the battery may be improved.

The lithium secondary battery is not particularly limited in form, and may include a lithium ion battery, a lithium ion polymer battery, a lithium sulfur battery, and the like.

The lithium secondary battery may be prepared by the following method.

First, a cathode is prepared.

For example, a cathode composition, in which a positive active material, a conductive material, a binder, a compound represented by Formula 1, and a solvent are mixed, is prepared. The cathode composition may be directly coated on a metal current collector to prepare a cathode plate. Alternatively, the cathode composition may be cast on a separate support and then a film separated from the support may be laminated on a metal current collector to prepare a cathode plate. The cathode is not limited to the forms listed above and may have forms other than the above forms.

N-methylpyrrolidone, acetone, or water may be used as the solvent, but it is not limited thereto, and any solvent that may be used in the art may be used.

Amounts of the positive active material, conductive material, binder, and solvent are levels commonly used in lithium secondary batteries. Depending on an intended use and configuration of the lithium secondary battery, one or more of the conductive material, binder, and solvent may be omitted.

Next, an anode is prepared.

For example, an anode composition is prepared by mixing a negative active material, a conductive material, a

binder, and a solvent. The anode composition may be directly coated on a metal current collector to prepare an anode plate. Alternatively, the anode composition may be cast on a separate support and then a film separated from the support may be laminated on a metal current collector to prepare an anode plate.

For the negative active material, any that may be used as a negative active material in the related art may be used. For example, the negative active material may include one or more selected from lithium metals, metals alloyable with lithium, transition metal oxides, non-transition metal oxides, and carbon-based materials.

For example, the metals alloyable with lithium may be Si, Sn, Al, Ge, Pb, Bi, Sb, and Si-Y alloy (Y may be an alkali metal, alkaline earth metal, group 13 element, group 14 element, transition metal, rare earth element, or a combination thereof, and is not Si), Sn-Y alloy (Y may be an alkali metal, alkaline earth metal, group 13 element, group 14 element, transition metal, rare earth element, or a combination thereof, and is not Sn), and the like. The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

For example, the transition metal oxide may be lithium titanium oxide, vanadium oxide, or lithium vanadium oxide.

For example, the non-transition metal oxide may be $SnO_2$, $SiO_x$($0<x<2$), etc.

The carbon-based material may be crystalline carbon, amorphous carbon, or a mixture thereof. The crystalline carbon may be graphite such as amorphous, plate-like, flake-like, spherical, or fibrous natural graphite or artificial graphite, and the amorphous carbon may be soft carbon (low-temperature calcined carbon), or hard carbon, mesophase pitch carbide, calcined coke, and the like.

The negative active material may include, for example, at least one selected from a silicon-based compound, a carbon-based material, a composite of a silicon-based compound and a carbon-based compound, a silicon oxide ($SiO_x$, $0<x<2$), an alloy of silicon and another metal, and a lithium titanium compound (for example, $Li_2TiO_3$). The silicon-based compound may be silicon particles, silicon alloy particles, and the like.

A size of the silicon-based compound may be less than 200 nm, for example, about 10 nm to about 150 nm. The term "size" may indicate an average particle diameter when the silicon-based compound is spherical, and may indicate an average long axis length when the silicon particles are non-spherical.

When the size of the silicon-based compound is within the above range, lifespan characteristics are excellent, and thus lifespan of a lithium secondary battery is further improved when the electrolyte according to an embodiment is used.

The carbon-based material may be crystalline carbon, amorphous carbon, or a mixture thereof. The crystalline carbon may be graphite such as amorphous, plate-like, flake-like, spherical, or fibrous natural graphite or artificial graphite, and the amorphous carbon may be soft carbon (low-temperature calcined carbon), or hard carbon, mesophase pitch carbide, calcined coke, and the like.

The composite of a silicon-based compound and a carbon-based compound may be a composite having a structure in which silicon nanoparticles are arranged on the carbon-based compound, a composite in which silicon particles are included on a surface of and inside the carbon-based compound, and a composite in which silicon particles are coated with the carbon-based compound and are included in the carbon-based compound. In the composite of a silicon-based compound and a carbon-based compound, the carbon-based compound may be graphite, graphene, graphene oxide, or a combination thereof.

The composite of a silicon-based compound and a carbon-based compound may be an active material obtained by dispersing silicon nanoparticles having an average particle diameter of about 200 nm or less on carbon-based compound particles and then coating with carbon, an active material in which silicon (Si) particles are present on and inside graphite, and the like. An average particle diameter of secondary particles of the composite of a silicon-based compound and a carbon-based compound may be about 5 $\mu$m to about 20 $\mu$m. An average particle diameter of the silicon nanoparticles may be 5 nm or more, for example, 10 nm or more, for example, 20 nm or more, for example, 50 nm or more, for example, 70 nm or more. The average particle diameter of the silicon nanoparticles may be 200 nm or less, 150 nm or less, 100 nm or less, 50 nm or less, 20 nm or less, or 10 nm or less. For example, the average particle diameter of the silicon nanoparticles may be about 100 nm to about 150 nm.

An average particle diameter of secondary particles of the composite of a silicon-based compound and a carbon-based compound may be about 5 $\mu$m to about 20 $\mu$m, for example, 7 $\mu$m to about 15 $\mu$m, for example, 10 $\mu$m to about 13 $\mu$m.

As another example of the composite of a silicon-based compound and a carbon-based compound, a porous silicon composite cluster disclosed in Korean Patent Publication No. 10-2018-0031585, and a porous silicon composite cluster structure disclosed in Korean Patent Publication No. 10-2018-0056395 may be used. Korean Patent Publication No. 10-2018-0031586 and Korean Patent Publication No. 10-2018-0056395 are incorporated herein by reference.

In the anode composition, the same conductive material and binder as in the case of the cathode composition may be used.

Amounts of the negative active material, conductive material, binder, and solvent are levels commonly used in lithium batteries. Depending on a use and configuration of the lithium battery, one or more of the conductive material,

binder, and solvent may be omitted.

Next, a separator to be inserted between the cathode and the anode is prepared.

For the separator, all that are used in a lithium battery in the art may be used. A separator having low resistance to ionic movement of an electrolytic solution and excellent impregnation ability for an electrolytic solutionmay be used. The separator may be, for example, selected from glass fiber, polyester, Teflon, polyethylene, polypropylene, polytetrafluoroethylene (PTFE), or combinations thereof, and may be in a form of a nonwoven or woven fabric. For example, a winding separator such as polyethylene, polypropylene, and the like may be used in a lithium ion cell, and a separator having an excellent impregnation ability for an organic electrolytic solution may be used in a lithium ion polymer cell. For example, the separator may be prepared according to the following method.

First, a separator composition is prepared by mixing a polymer resin, a filler, and a solvent. The separator composition may be directly coated on an electrode and dried to form a separator. Alternatively, after the separator composition is casted and dried on a support, a separator film peeled from the support may be stacked on an electrode to form a separator.

The polymer resin used for manufacturing the separator is not particularly limited, and any substance used in a binder of a electrode plate may be used. For example, vinylidene fluoride/hexafluoropropylene copolymer, polyvinylidene fluoride (PVDF), polyacrylonitrile, polymethyl methacrylate, or a mixture thereof, may be used.

Next, an electrolyte is prepared.

The electrolyte is a lithium salt-containing non-aqueous electrolyte, and a non-aqueous liquid electrolyte, an organic solid electrolyte, an inorganic solid electrolyte, and the like may be used.

For the non-aqueous liquid electrolyte, for example, aprotic organic solvents such as N-methyl-2-pyrrolidinone, propylene carbonate, ethylene carbonate, butylene carbonate, dimethyl carbonate, diethyl carbonate, gamma-butylolactone, 1,2-dimethoxyethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, or ethyl propionate may be used.

For the organic solid electrolyte, for example, polyethylene derivatives, polyethylene oxide derivatives, polypropylene oxide derivatives, phosphoric acid ester polymers, poly agitation lysine, polyester sulfide, polyvinyl alcohol, polyvinylidene fluoride, a polymer containing an ionic dissociation group, and the like may be used.

For the inorganic solid electrolyte, for example, nitrides, halides, and sulfates of Li such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, or $Li_3PO_4$-$Li_2S$-$SiS_2$ may be used.

The lithium salt is a material that is easily dissolved in the non-aqueous electrolyte, and may include, for example, at least one selected from the group consisting of $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ ($2 \leq x \leq 20$, and $2 \leq y \leq 20$), LiCl, LiI, lithium bis(oxalato)borate (LiBOB), $LiPO_2F_2$, and compounds represented by Formulas 6 to 9 below, but is not limited thereto, and any that may be used as a lithium salt in the art may be used.

Formula 6

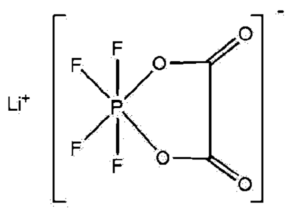

Formula 7

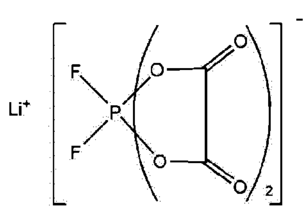

Formula 8

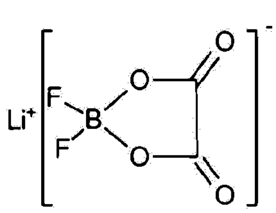

Formula 9

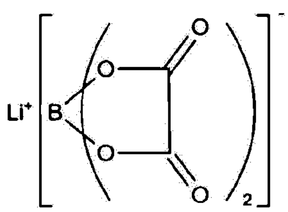

A concentration of the lithium salt in the electrolyte may be about 0.01 M to about 5.0 M, for example, about 0.05 M to about 5.0 M, for example, about 0.1 M to about 5.0 M, for example, about 0.1 M to about 2.0 M. When the

concentration of the lithium salt is within the above range, further improved lithium secondary battery characteristics may be obtained.

The organic solvent may be at least one selected from carbonate-based solvents, ester-based solvents, ether-based solvents, and ketone-based solvents.

As a carbonate-based solvent, ethyl methyl carbonate (EMC), methyl propyl carbonate (MPC), ethyl propyl carbonate (EPC), dimethyl carbonate (DMC), diethyl carbonate (DEC), dipropyl carbonate (DPC), propylene carbonate (PC), ethylene carbonate (EC), butylene carbonate (BC), etc. may be used; as an ester-based solvent, methyl propionate, ethyl propionate, propyl propionate, ethyl butyrate, methyl acetate, ethyl acetate, n-propyl acetate, dimethyl acetate, gamma butyrolactone, decanolide, gamma valerolactone, mevalonolactone, caprolactone, etc. may be used; and as an ether-based solvent, dibutyl ether, tetraglyme, diglyme, dimethoxyethane, 2-methyltetrahydrofuran, tetrahydrofuran, etc. may be used; as a ketone-based solvent, cyclohexanone, etc. may be used; and as a nitrile-based solvent, acetonitrile (AN), succinonitrile (SN), adiponitrile, and the like may be used. As other solvents, dimethyl sulfoxide, dimethylformamide, dimethylacetamide, tetrahydrofuran, etc. may be used, but the organic solvent is not necessarily limited thereto, and any solvent that may be used as an organic solvent in the art may be used. For example, the organic solvent may include a mixed solvent of about 50 vol% to about 95 vol% of chain carbonate and about 5 vol% to about 50 vol% of cyclic carbonate, for example, a mixed solvent of about 70 vol% to about 95 vol% of chain carbonate and about 5 vol% to about 30 vol% of cyclic carbonate. For example, the organic solvent may be a mixed solvent of three or more organic solvents.

The electrolyte may further include the compound represented by Formula 1. In this case, an amount of the compound represented by Formula 1 included in the electrolyte may be in a range of about 0.01 wt% to about 10 wt%, about 0.05 wt% to about 5%, about 0.1 wt% to about 3%, or about 0.5 wt% to about 1%, with respect to the total weight of the electrolyte. Within this range, it is possible to prepare a lithium secondary battery with further improved high-temperature characteristics and resistance characteristics without deteriorating lifespan characteristics by suppressing an increase in interfacial resistance.

The electrolyte may be in a liquid or gel state. The electrolyte may be prepared by adding a lithium salt and the additives to an organic solvent.

As shown in FIG. 1, in a lithium secondary battery 1, a separator 4 may be arranged between a cathode 3 and an anode 2, to form a battery structure. After the battery structure is stacked, the stack is impregnated with an organic liquid electrolyte, and the resulting product is accommodated in a pouch 5 and sealed, and the lithium secondary battery 1 is completed. In this regard, the cathode 3 and the anode 2 may each have an electrode tab 7, which is attached by a protective tape 6 and is arranged to partially protrude to the outside of the pouch 5. A battery case may be a pouch type, a cylindrical shape, a prismatic shape, or a thin film type. For example, the lithium secondary battery may be a large-sized thin film battery. The lithium secondary battery is not particularly limited in form, and may include a lithium ion battery, a lithium ion polymer battery, a lithium sulfur battery, and the like.

A separator may be arranged between the cathode and the anode to form a battery structure. After the battery structure is stacked in a bi-cell structure, the stack is impregnated with an organic liquid electrolyte, and the resulting product is accommodated in a pouch 5 and sealed, and a lithium ion polymer battery is completed.

In addition, a plurality of the battery structure may be stacked to form a battery pack, and such a battery pack may be used in all devices requiring high capacity and high output. For example, the battery pack may be used in laptops, smartphones, electric vehicles, and the like.

The lithium secondary battery according to an embodiment has excellent long-term high-temperature storage characteristics and improved low-temperature lifespan capacity retention rate, compared to a lithium secondary battery prepared by using a cathode material not containing the compound represented by Formula 1.

An operating voltage of the lithium secondary battery to which the cathode, the anode, and the electrolyte are applied has, for example, a lower limit of about 2.5 V to about 2.8 V and an upper limit of about 4.1 V or more, for example, about 4.1 to about 4.5 V.

In addition, the lithium secondary battery may be applied to, for example, a power tool that moves by receiving motivity from a motor run by a battery; electric vehicles (EVs) including hybrid electric vehicles (HEVs), plug-in hybrid electric vehicles (PHEVs), and the like; electric two-wheeled vehicles including E-bikes and Escooters; electric golf carts; power storage systems, and the like, but is not limited thereto.

In the present specification, a $C_6$-$C_{60}$ aryl group refers to a monovalent group having a carbocyclic aromatic system having 6 to 60 carbon atoms, and a $C_6$-$C_{60}$ arylene group refers to a divalent group having a carbocyclic aromatic system having 6 to 60 carbon atoms. Specific examples of the $C_6$-$C_{60}$ aryl group include a phenyl group, a naphthyl group, anthracenyl group, a phenanthrenyl group, a pyrenyl group, a chrysenyl group, and the like. When the $C_6$-$C_{60}$ aryl group and the $C_6$-$C_{60}$ arylene group include two or more rings, the two or more rings may be fused to each other.

In the present specification, a $C_2$-$C_{60}$ heteroaryl group refers to a monovalent group including at least one heteroatom selected from N, O, P, and S as a ring-forming atom, and having a carbocyclic aromatic system having 2 to 60 carbon atoms, and a $C_2$-$C_{60}$ heteroarylene group refers to a divalent group including at least one heteroatom selected

from N, O, P, and S as a ring-forming atom, and having a carbocyclic aromatic system of 2 to 60 carbon atoms. Specific examples of the $C_2$-$C_{60}$ heteroaryl group include a pyridinyl group, a pyrimidinyl group, a pyrazinyl group, a pyridazinyl group, a triazinyl group, a quinolinyl group, an isoquinolinyl group, and the like. When the $C_2$-$C_{60}$ heteroaryl group and the $C_2$-$C_{60}$ heteroarylene group include two or more rings, the two or more rings may be fused to each other.

In the present specification, a $C_6$-$C_{60}$ aryloxy group refers to -$OA_{102}$ (where $A_{102}$ is the $C_6$-$C_{60}$ aryl group), and a $C_6$-$C_{60}$ arylthio group refers to -$SA_{103}$ (here, $A_{103}$ is the $C_6$-$C_{60}$ aryl group).

In the present specification, a monovalent non-aromatic condensed polycyclic group refers to a monovalent group, in which two or more rings are condensed with each other, only carbon is included as a ring-forming atom (for example, a number of carbon atoms may be 8 to 60), and the entire molecule has non-aromaticity. Specific examples of the non-aromatic condensed polycyclic group include a fluorenyl group, and the like. A divalent non-aromatic condensed polycyclic group in the present specification means a divalent group having the same structure as the monovalent non-aromatic condensed polycyclic group.

In the present specification, a monovalent non-aromatic condensed heteropolycyclic group refers to a monovalent group, in which two or more rings are condensed with each other, and a hetero atom selected from N, O, P, and S is included apart from carbon as a ring-forming atom (for example, a number of carbon atoms may be 8 to 60), and the entire molecule has non-aromaticity. The monovalent non-aromatic condensed heteropolycyclic group includes a carbazolyl group, and the like. A divalent non-aromatic condensed heteropolycyclic group in the present specification means a divalent group having the same structure as the monovalent non-aromatic condensed heteropolycyclic group.

The term "alkyl group", used herein, means a branched or unbranched aliphatic hydrocarbon group. In an embodiment, an alkyl group may be substituted or unsubstituted. The alkyl group includes a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, a cycloheptyl group, etc., but not limited thereto, and each of these may be optionally substituted in another embodiment. In another embodiment, an alkyl group may contain 1 to 6 carbon atoms. For example, a C1-C6 alkyl group may include a methyl group, an ethyl group, a propyl group, an isopropyl group, a butyl group, an isobutyl group, a sec-butyl group, a pentyl group, a 3-pentyl group, a hexyl group, and the like, but is not limited thereto.

One or more hydrogen atoms in the alkyl group may be substituted with a halogen atom, a $C_1$-$C_{20}$ alkyl group substituted with a halogen atom (for example, $CF_3$, $CHF_2$, $CH_2F$, $CCl_3$, etc.), a $C_1$-$C_{20}$ alkoxy group, a $C_2$-$C_{20}$ alkoxyalkyl group, a hydroxyl group, a nitro group, a cyano group, an amino group, an amidino group, hydrazine, hydrazone, a carboxyl group or a salt thereof, a sulfonyl group, a sulfamoyl group, a sulfonic acid group or a salt thereof, phosphoric acid or a salt thereof, or a $C_1$-$C_{20}$ alkyl group, a $C_2$-$C_{20}$ alkenyl group, a $C_2$-$C_{20}$ alkynyl group, a $C_1$-$C_{20}$ heteroalkyl group, a $C_6$-$C_{20}$ aryl group, a $C_7$-$C_{20}$ arylalkyl group, a $C_6$-$C_{20}$ heteroaryl group, a $C_7$-$C_{20}$ heteroarylalkyl group, a $C_6$-$C_{20}$ heteroaryloxy group, or a $C_6$-$C_{20}$ heteroaryloxyalkyl group.

In the present specification, the term "alkenyl group" refers to a hydrocarbon group including at least one carbon-carbon double bond, and having a carbon number of 2 to 20, and includes an ethenyl group, 1-propenyl group, a 2-propenyl group, a 2-methyl-1-propenyl group, 1-butenyl group, 2-butenyl group, cyclopropenyl group, cyclopentenyl, cyclohexenyl, and the like, but is not limited thereto. In another embodiment, the alkenyl group may be substituted or unsubstituted. In another embodiment, the alkenyl group may have a carbon number of 2 to 40.

In the present specification, the term "alkynyl group" refers to a hydrocarbon group including at least one carbon-carbon triple bond, and having a carbon number of 2 to 20, and includes an ethynyl group, 1-propynyl group, 1-butynyl group, 2-butynyl group, etc., but is not limited thereto. In another embodiment, the alkynyl group may be substituted or unsubstituted. In another embodiment, the alkynyl group may have a carbon number of 2 to 40.

In the present specification, a substituent is derived from an unsubstituted parent group, in which one or more hydrogen atoms are replaced by another atom or functional group. Unless otherwise indicated, when a functional group is considered to be "substituted", it means that the functional group is substituted with one or more substituents independently selected from the group consisting of $C_1$-$C_{20}$ alkyl, $C_2$-$C_{20}$ alkenyl, $C_2$-$C_{20}$ alkynyl, $C_1$-$C_{20}$alkoxy, halogen, a cyano group, a hydroxy group, and a nitro group. When a functional group is described as "optionally substituted", the functional group may be substituted with the substituents described above.

The term "halogen" includes fluorine, bromine, chlorine, iodine, and the like.

"Alkoxy" refers to "alkyl-O-", wherein alkyl is as described above. Examples of the alkoxy group include a methoxy group, an ethoxy group, a 2-propoxy group, a butoxy group, a t-butoxy group, a pentyloxy group, and a hexyloxy group. One or more hydrogen atoms of the alkoxy group may be substituted with the same substituents as in the case of the above-mentioned alkyl group.

The present disclosure is explained in more detail through the following examples and comparative examples. However, the examples are for exemplifying the present disclosure, and the scope of the present disclosure is not limited thereto.

(Preparation of lithium secondary battery)

Example 1

96 wt% of $LiCoO_2$ as a positive active material, 2 wt% ketjen black as a conductive material, and 2 wt% of polyvinylidene fluoride (PVdF) as a binder, were mixed, and a compound represented by Formula 2-1 was added as an additive to prepare a cathode material. Here, an amount of the compound represented by Formula 2-1 was 0.001 part by weight, with respect to 100 parts by weight of the positive active material.

Formula 2-1

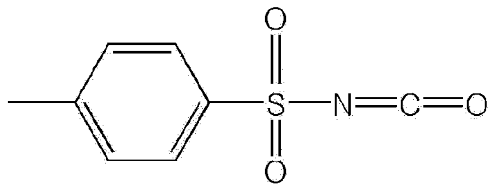

The prepared cathode material was put into N-methyl-2-pyrrolidone, and was stirred for 30 minutes by using a mechanical stirrer to prepare positive active material slurry. The slurry was applied to a thickness of about 60 μm on a 20 μm thick aluminum current collector by using a doctor blade, dried in a hot air dryer at 100 °C for 0.5 hours, dried again for 4 hours under vacuum conditions at 120 °C, and roll-pressed, to prepare a cathode.

Artificial graphite as a negative active material, and styrene-butadiene rubber and carboxymethylcellulose as binders were mixed in a weight ratio of 98:1:1, respectively, and dispersed in distilled water, to prepare negative active material slurry. The slurry was applied to a thickness of about 60 μm on a 10 μm thick copper current collector by using a doctor blade, dried in a hot air dryer at 100 °C for 0.5 hours, dried again for 4 hours under vacuum conditions at 120 °C, and roll-pressed, to prepare an anode.

For an electrolyte, an electrolytic solution was prepared by adding 1.5 M of $LiPF_6$ as a lithium salt to a mixed solvent having a volume ratio of 2:1:3:4 of ethylene carbonate, propylene carbonate, ethyl propionate, and propyl propionate.

A pouch-type lithium secondary battery was prepared by using the prepared positive and anodes, a polyethylene separator having a thickness of 14 μm, and the electrolyte.

Example 2

A lithium secondary battery was prepared in the same manner as in Example 1, except that the amount of the compound represented by Formula 2-1 was changed to 0.05 parts by weight with respect to 100 parts by weight of the positive active material.

Example 3

A lithium secondary battery was prepared in the same manner as in Example 1, except that the amount of the compound represented by Formula 2-1 was changed to 0.1 parts by weight with respect to 100 parts by weight of the positive active material.

Example 4

A lithium secondary battery was prepared in the same manner as in Example 1, except that the amount of the compound represented by Formula 2-1 was changed to 1 part by weight with respect to 100 parts by weight of the positive active material.

Comparative Example 1

A lithium secondary battery was prepared in the same manner as in Example 1, except that the compound represented by Formula 2-1 was not added to the cathode material.

Evaluation Example 1: Evaluation of open circuit voltage (OCV) and AC internal resistance (AC-IR) when stored at high temperature (60 °C)

Lithium secondary batteries prepared in Examples 1 to 4 and Comparative Example 1 were charged to a state of charge (SOC) of 100 % (fully charged, when a battery is charged/discharged at 2.75 V to 4.4 V, and when total charge capacity of the battery is set to 100 %, the battery is charged to have charge capacity of 100 %), under conditions of constant current charging at 0.7 C until the voltage reaches 4.5 V-constant voltage charging, and cut-off at 0.025 C, and then the batteries were stored at 60 °C for 60 days.

Open circuit voltages (OCV, V) and alternating current internal resistance (AC-IR, mΩ) of the lithium secondary batteries before storage at 60 °C were measured, and OCV and AC-IR after 10 days, 30 days, and 60 days were measured, and the results are shown in Table 1 and FIGS. 2 and 3 below.

[Table 1]

| Class | Day 0 | | Day 10 | | Day 30 | | Day 60 | |
|---|---|---|---|---|---|---|---|---|
| | OCV (V) | AC-IR (mΩ) | OCV (V) | AC-IR (mΩ) | OCV (V) | AC-IR (mΩ) | OCV (V) | AC-IR (mΩ) |
| Comparat ive Example 1 | 4.47 | 22.42 | 4.40 | 36.87 | 4.38 | 45.38 | 4.31 | 48.58 |
| Example 1 | 4.47 | 24.51 | 4.41 | 37.15 | 4.38 | 41.72 | 4.35 | 42.10 |
| Example 2 | 4.47 | 25.83 | 4.41 | 37.60 | 4.39 | 40.11 | 4.36 | 39.45 |
| Example 3 | 4.47 | 26.76 | 4.41 | 37.90 | 4.39 | 40.70 | 4.36 | 40.76 |
| Example 4 | 4.47 | 27.65 | 4.40 | 39.10 | 4.38 | 41.90 | 4.35 | 42.20 |

As shown in Table 1 and FIGS. 2 and 3, it was found that the lithium secondary battery of Example 1 showed a protection effect for the cathode due to the addition of the compound represented by Formula 1 to the cathode, and when stored at a high temperature for a long time, compared to Comparative Example 1 without an additive, a self-discharging rate level was equivalent or improved, and an AC-IR increase rate was also reduced.

Evaluation Example 2: Evaluation of low- temperature (10 °C) lifespan characteristics

The lithium secondary batteries prepared in Examples 1 to 4 and Comparative Example 1 were charged at a constant current of 0.5 C rate until the voltage reached 4.4 V (vs. Li), and then were charged in a constant voltage mode while maintaining a voltage of 4.4 V, and were cut-off at a current of 0.05 C rate, at 10 °C. Subsequently, the batteries were discharged at a constant current of 1.0 C rate until the voltage reached 2.8 V (vs. Li). This charge/discharge cycle was repeated 150 times.

There was a 10 minute rest period after one charge/discharge cycle in all the charge/discharge cycles.

Low-temperature lifespan characteristics were evaluated with measured capacity retention rates in respective cycles, and the results are shown in FIG. 4. A capacity retention rate in each cycle is defined by Equation 1 below:

<Equation 1>

Capacity retention rate = [discharge capacity in each cycle / discharge capacity in 1st cycle] x 100

As shown in FIG. 4, as a result of the evaluation of charge/discharge characteristics at a low temperature, it may be seen that the low- temperature lifespan characteristics of the lithium secondary batteries of Examples 1 to 4 were significantly improved compared to the lithium secondary battery of Comparative Example 1.

Reference example: Evaluation of low-temperature (10 °C ) lifespan characteristics when added to electrolyte

In order to confirm an effect of adding the compound represented by Formula 2-1 to the liquid electrolyte, a lithium secondary battery was constructed as follows and low-temperature lifespan characteristics at 10 °C were evaluated.

An electrolytic solution was prepared by adding 0.5 wt% of the compound represented by Formula 2-1, with respect to the total weight of the electrolytic solution, to a liquid electrolyte, in which 1.3 M of $LiPF_6$ was added as a lithium salt to a mixed solvent of electrolytes having a volume ratio of ethylene carbonate, propylene carbonate, ethyl propionate, and propyl propionate of 10:15:30:45. A lithium secondary battery was manufactured by performing the same process as in Comparative Example 1, except that the electrolyte was used.
Meanwhile, a lithium secondary battery to which the compound represented by Formula 2-1 was not added to an electrolytic solution was used as a reference.
The lithium secondary battery was charged at a constant current of 0.2 C rate until the voltage reached 4.47 V (vs. Li), then, the battery was charged maintaining a voltage of 4.47 V in a constant voltage mode, and cut-off at a current of 0.02 C rate, at 10 °C. Subsequently, the battery was discharged at a constant current of 0.2 C rate until the voltage reached 2.75 V (vs. Li).
Next, the battery was charged at a constant current of 1.3 C rate until the voltage reached 4.47 V (vs. Li), then, the battery was charged maintaining a voltage of 4.47 V in a constant voltage mode, and cut-off at a current of 0.05 C rate. Subsequently, the battery was discharged at a constant current of 1.0 C rate until the voltage reached 3.0 V (vs. Li). This charge/discharge cycle was repeated 80 times.
There was a 10 minute rest period after one charge/discharge cycle in all the charge/discharge cycles.
Low-temperature lifespan characteristics were evaluated with measured capacity retention rates in respective cycles, and the results are shown in FIG. 5.
As shown in FIG. 5, it may be seen that when the compound represented by Formula 2-1 was added to the liquid electrolyte, low-temperature lifespan characteristics were remarkably improved. In particular, it may be seen that the addition of the compound is the more advantageous the faster the charging/discharging.
Therefore, when an additive such as the compound represented by Formula 2-1 is added to the electrolyte as well as the cathode, low-temperature lifespan characteristics are expected to be further improved, and in particular, it may be expected that the faster the charging/discharging, the more advantageous the addition.
Hitherto embodiments have been described with reference to drawings and examples, but these are only illustrative, and those skilled in the art will be able to understand that various modifications and equivalent other embodiments are possible therefrom. Therefore, the scope of the present disclosure should be defined by the appended claims.

[Explanation of reference numerals]

1: Lithium secondary battery; 2: Anode;
3 Cathode; 4 Separator;
5: Pouch; 6: Protective tape;
7: Electrode tab

## Claims

1. A cathode material for a lithium secondary battery, comprising: a positive active material; and

an additive comprising a compound represented by Formula 1 below:

Formula 1

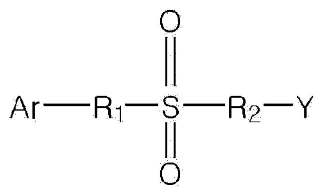

,

wherein in Formula 1,
Ar is a substituted or unsubstituted $C_6$-$C_{60}$ aryl group, a substituted or unsubstituted $C_6$-$C_{60}$ aryloxy group, a substituted or unsubstituted $C_2$-$C_{60}$ heteroaryl group, a substituted or unsubstituted monovalent non-aromatic condensed polycyclic group, or a substituted or unsubstituted monovalent non-aromatic condensed heteropol-

ycyclic group;
$R_1$ and $R_2$ are each independently a single bond or an unsubstituted $C_1$-$C_{30}$ alkylene group, and
Y is an isocyanate group (-NCO), an isothiocyanate group (-NCS), a cyanate group (-OCN), a thiocyanate group (-SCN), a cyano group (-CN), or an isocyano group (-NC).

**2.** The cathode material of claim 1, wherein, in Formula 1, Ar is a substituted or unsubstituted $C_6$-$C_{30}$ aryl group.

**3.** The cathode material of claim 1, wherein,

the compound is an isocyanate-based compound represented by Formula 1-1 below:

Formula 1-1

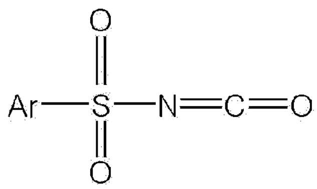

,

wherein in Formula 1-1,
Ar is a substituted or unsubstituted $C_6$-$C_{60}$ aryl group, a substituted or unsubstituted $C_6$-$C_{60}$ aryloxy group, a substituted or unsubstituted $C_2$-$C_{60}$ heteroaryl group, a substituted or unsubstituted monovalent non-aromatic condensed polycyclic group, or a substituted or unsubstituted monovalent non-aromatic condensed heteropolycyclic group.

**4.** The cathode material of claim 1, wherein,

the compound is represented by Formula 2 below:

Formula 2

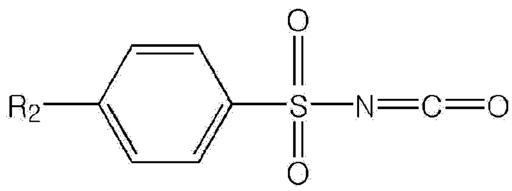

,

wherein in Formula 2,
$R_2$ is hydrogen, a fluoro group (-F), a chloro group (-Cl), a bromo group (-Br), an iodo group (-I), a hydroxyl group, a cyano group, a nitro group, an amino group, an amidino group, a hydrazine group, a hydrazone group, carboxylic acid or a salt thereof, sulfonic acid or a salt thereof, phosphoric acid or a salt thereof, a substituted or unsubstituted $C_1$-$C_{20}$ alkyl group, a substituted or unsubstituted $C_1$-$C_{20}$ alkoxy group, a substituted or unsubstituted $C_2$-$C_{20}$ alkenyl group, a substituted or unsubstituted $C_2$-$C_{20}$ alkynyl group, a substituted or unsubstituted $C_3$-$C_{20}$ cycloalkyl group, a substituted or unsubstituted $C_6$-$C_{20}$ aryl group, or a substituted or unsubstituted $C_2$-$C_{20}$ heteroaryl group.

**5.** The cathode material of claim 4, wherein, in Formula 2, R is hydrogen, -F, -Cl, -Br, -I, or an unsubstituted $C_1$-$C_{10}$ alkyl group.

**6.** The cathode material of claim 1, wherein, the compound includes at least one of compounds represented by Formulas 2-1 to 2-3 below:

Formula 2-1

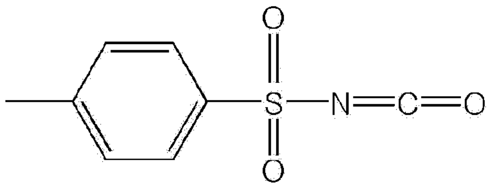

,

Formula 2-2

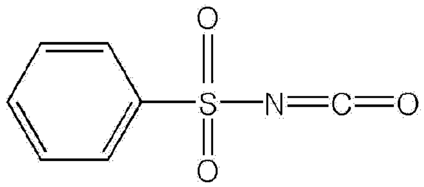

,

and

Formula 2-3

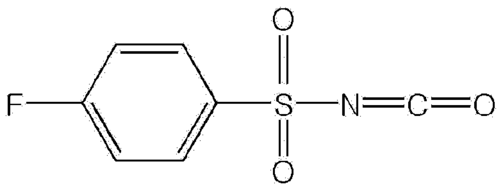

.

**7.** The cathode material of claim 1, wherein,
an amount of the compound represented by Formula 1 is greater than 0 parts by weight and not more than 10 parts by weight, with respect to 100 parts by weight of the positive active material.

**8.** The cathode material of claim 1, wherein,
an amount of the compound represented by Formula 1 is about 0.001 parts by weight to about 5 parts by weight, with respect to 100 parts by weight of the positive active material.

**9.** The cathode material of claim 1, wherein, the positive active material comprises at least one selected from $LiCoO_2$, $LiMn_xO_{2x}$ (x=1, 2), $LiNi_{1-x}Mn_xO_2$. (0<x<1), $LiNi_{1-x-y}Co_xMn_yO_2$ ($0 \leq x \leq 0.5$, and $0 \leq y \leq 0.5$), and $LiNi_{1-x-y}Co_xAl_yO_2$ ($0 \leq x \leq 0.5$, and $0 \leq y \leq 0.5$).

**10.** The cathode material of claim 1, further comprising:
a conductive material and a binder.

**11.** A cathode for a lithium secondary battery, comprising a cathode material according to any one of claims 1 to 10.

**12.** A lithium secondary battery comprising: a cathode comprising a cathode material according to any one of claims 1 to 10;

an anode comprising a negative active material; and
an electrolyte arranged between the cathode and the anode.

**13.** The lithium secondary battery of claim 12, wherein

the electrolyte comprises a lithium salt and an organic solvent, and
the electrolyte further comprises the compound represented by Formula 1.

**14.** The lithium secondary battery of claim 13, wherein an amount of the compound represented by Formula 1 comprised in the electrolyte is in a range of about 0.01 wt% to about 10 wt%, with respect to the total weight of the electrolyte.

**15.** The lithium secondary battery of claim 13, wherein an amount of the compound represented by Formula 1 comprised in the electrolyte is in a range of about 0.05 wt% to about 5 wt%, with respect to the total weight of the electrolyte.

FIG. 1

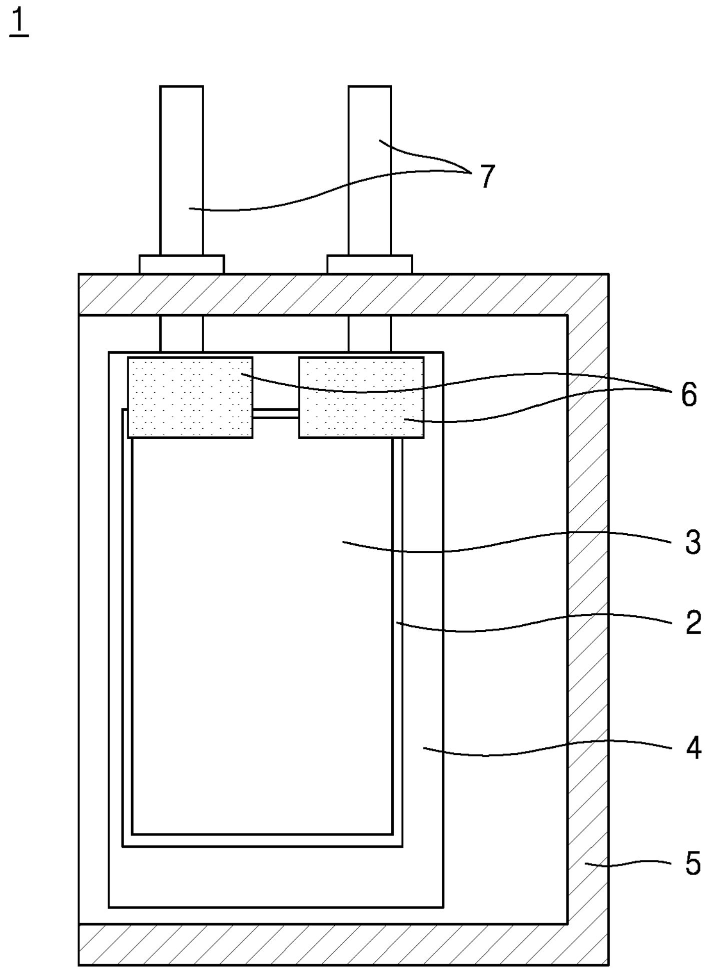

FIG. 2

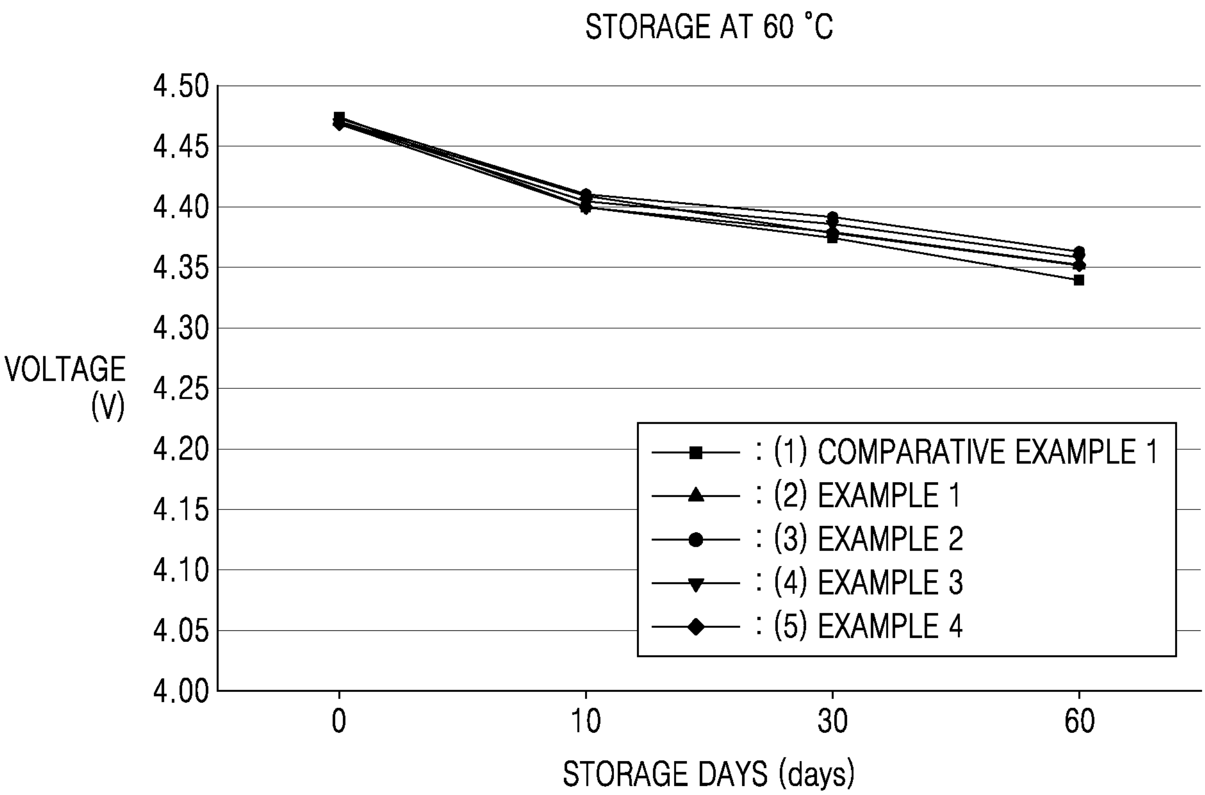
STORAGE AT 60 °C
VOLTAGE (V)
4.50
4.45
4.40
4.35
4.30
4.25
4.20
4.15
4.10
4.05
4.00
0
10
30
60
STORAGE DAYS (days)
: (1) COMPARATIVE EXAMPLE 1
: (2) EXAMPLE 1
: (3) EXAMPLE 2
: (4) EXAMPLE 3
: (5) EXAMPLE 4

FIG. 3

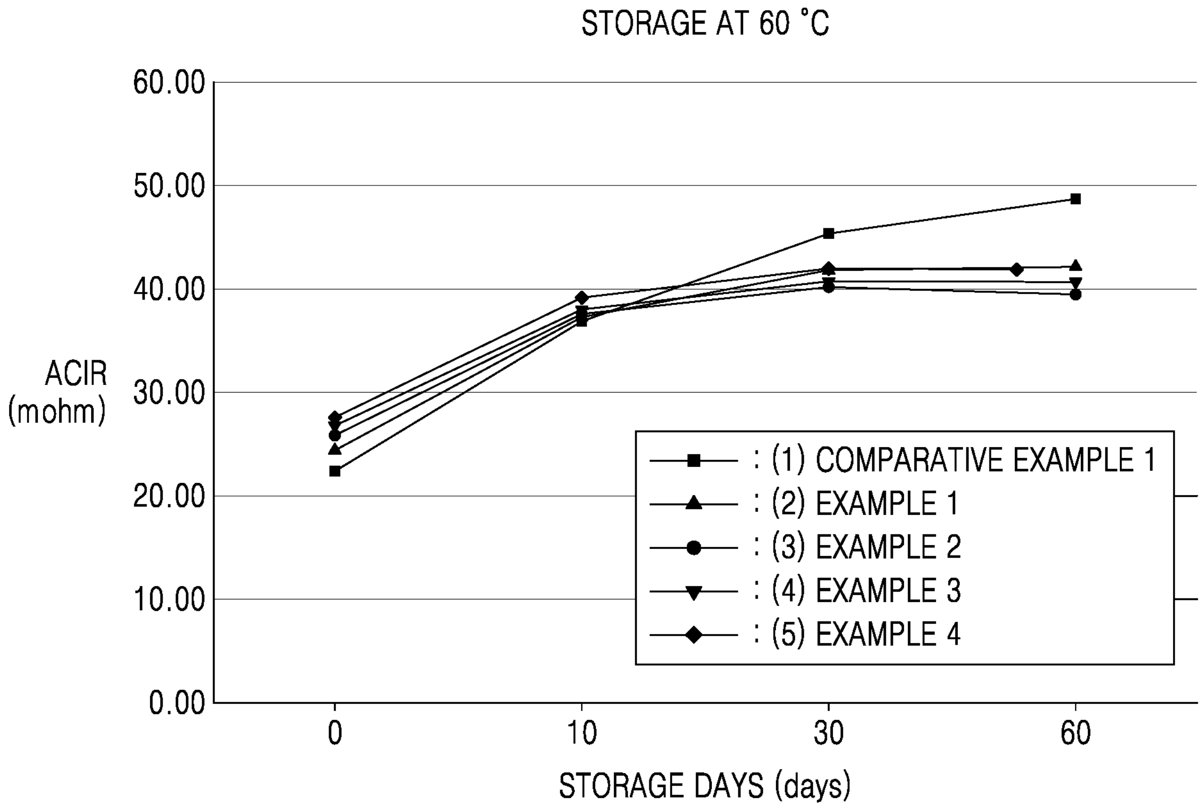
STORAGE AT 60 ˚C
60.00
50.00
40.00
30.00
20.00
10.00
0.00
ACIR (mohm)
0
10
30
60
STORAGE DAYS (days)
: (1) COMPARATIVE EXAMPLE 1
: (2) EXAMPLE 1
: (3) EXAMPLE 2
: (4) EXAMPLE 3
: (5) EXAMPLE 4

FIG. 4

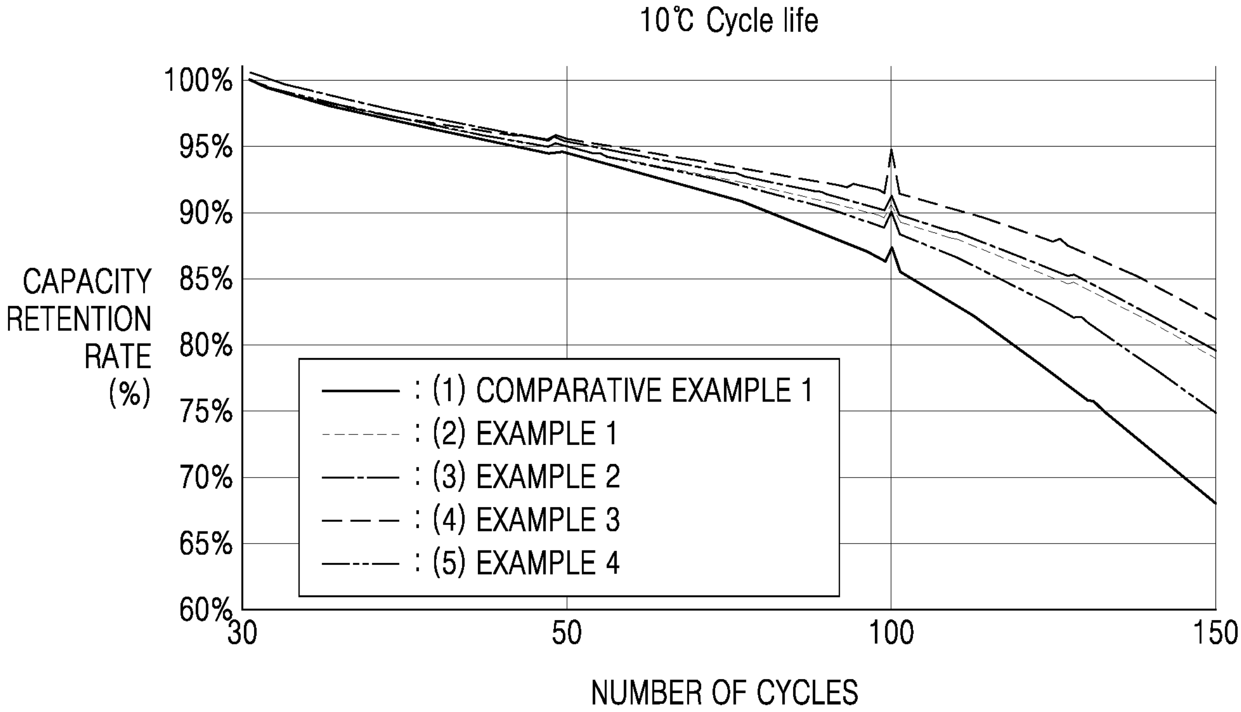
10℃ Cycle life
100%
95%
90%
85%
80%
75%
70%
65%
60%
CAPACITY
RETENTION
RATE
(%)
30
50
100
150
NUMBER OF CYCLES
: (1) COMPARATIVE EXAMPLE 1
: (2) EXAMPLE 1
: (3) EXAMPLE 2
: (4) EXAMPLE 3
: (5) EXAMPLE 4

FIG. 5

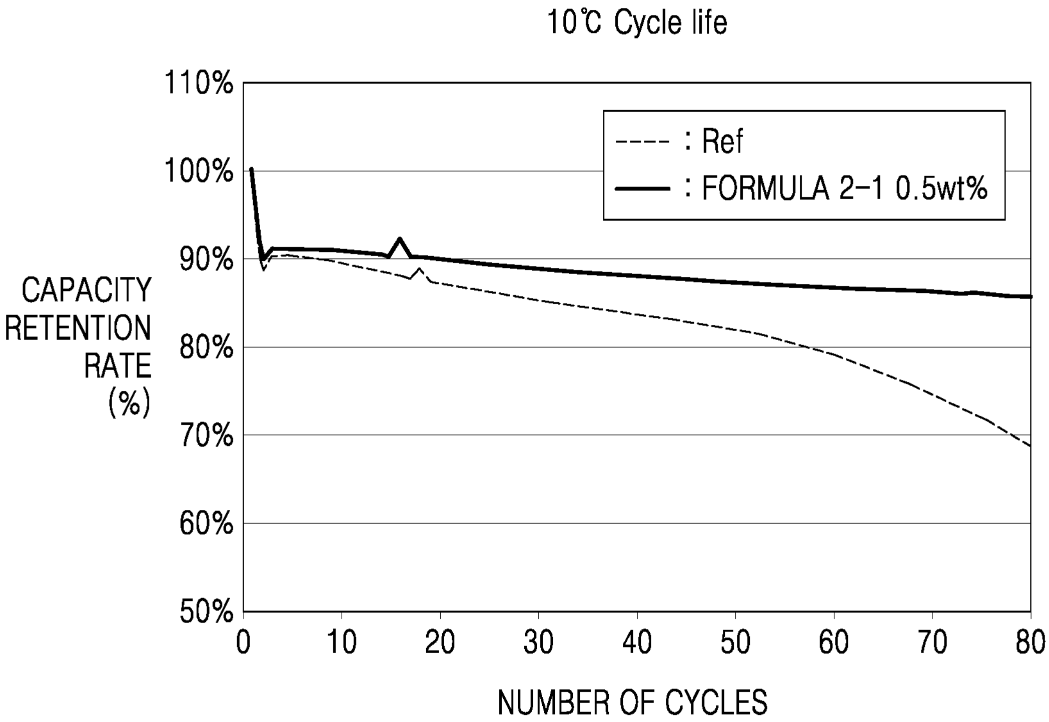
10℃ Cycle life
110%
100%
90%
80%
70%
60%
50%
CAPACITY RETENTION RATE (%)
0
10
20
30
40
50
60
70
80
NUMBER OF CYCLES
: Ref
: FORMULA 2-1 0.5wt%

**INTERNATIONAL SEARCH REPORT**

International application No.
**PCT/KR2021/020173**

**A. CLASSIFICATION OF SUBJECT MATTER**

**H01M 4/62**(2006.01)i; **H01M 4/131**(2010.01)i; **H01M 10/0567**(2010.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/62(2006.01); H01M 10/052(2010.01); H01M 12/08(2006.01); H01M 4/13(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive electrode active material), 첨가제(additive), 술폰기(sulfonate), 이소시아네이트(isocyanate), 리튬 이차전지(lithium secondary battery)

**C. DOCUMENTS CONSIDERED TO BE RELEVANT**

| Category* | Citation of document, with indication, where appropriate, of the relevant passages | Relevant to claim No. |
|---|---|---|
| Y | DONG, P. et al. Stabilizing interface layer of LiNi0.5Co0.2Mn0.3O2 cathode materials under high voltage using p-toluenesulfonyl isocyanate as film forming additive. Journal of Power Sources. 2017, [electronic publication] 02 February 2017, vol. 344, pp. 111-118.<br>See pages 111-113 and 117; and figure 7. | 1-15 |
| Y | KR 10-2018-0116564 A (INCHEON NATIONAL UNIVERSITY RESEARCH & BUSINESS FOUNDATION) 25 October 2018 (2018-10-25)<br>See claims 1-14; and paragraphs [0009]-[0011] and [0073]-[0086]. | 1-15 |
| Y | WANG, R. et al. In Situ Surface Protection for Enhancing Stability and Performance of LiNi0.5Mn0.3Co0.2O2 at 4.8 V: The Working Mechanisms. ACS Materials Lett. 18 February 2020, vol. 2, pp. 280-290.<br>See abstract; and page 280. | 1-15 |
| A | KR 10-2019-0119963 A (SAMSUNG ELECTRONICS CO., LTD. et al.) 23 October 2019 (2019-10-23)<br>See claims 1-3 and 14; and paragraphs [0103]-[0119]. | 1-15 |
| A | KR 10-2019-0012858 A (LG CHEM, LTD.) 11 February 2019 (2019-02-11)<br>See entire document. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 April 2022** | **11 April 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**
**Information on patent family members**

International application No.
**PCT/KR2021/020173**

| Patent document cited in search report | Publication date (day/month/year) | Patent family member(s) | Publication date (day/month/year) |
|---|---|---|---|
| KR 10-2018-0116564 A | 25 October 2018 | KR 10-1913939 B1 | 31 October 2018 |
| | | WO 2018-194248 A2 | 25 October 2018 |
| | | WO 2018-194248 A3 | 18 April 2019 |
| | | WO 2018-194248 A9 | 20 June 2019 |
| KR 10-2019-0119963 A | 23 October 2019 | US 10714800 B2 | 14 July 2020 |
| | | US 2019-0319322 A1 | 17 October 2019 |
| KR 10-2019-0012858 A | 11 February 2019 | CN 110800136 A | 14 February 2020 |
| | | EP 3624236 A1 | 18 March 2020 |
| | | EP 3624236 A4 | 10 June 2020 |
| | | JP 2020-522852 A | 30 July 2020 |
| | | KR 10-2244905 B1 | 26 April 2021 |
| | | US 2020-0203756 A1 | 25 June 2020 |
| | | WO 2019-022358 A1 | 31 January 2019 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020180031585
- KR 1020180056395
- KR 1020180031586